Europäisches Patentamt

European Patent Office

Office européen des brevets

(19)

(11) Veröffentlichungsnummer: **0 099 992**
**B1**

(12) ## EUROPÄISCHE PATENTSCHRIFT

(45) Veröffentlichungstag der Patentschrift: **25.05.88**

(21) Anmeldenummer: **83106280.7**

(22) Anmeldetag: **28.06.83**

(51) Int. Cl.⁴: **B 23 B 45/02,** H 02 P 5/00,
B 23 Q 15/08

(54) Werkzeugmaschine mit einer Regeleinrichtung.

(30) Priorität: **29.07.82 DE 3228304**

(43) Veröffentlichungstag der Anmeldung:
**08.02.84 Patentblatt 84/06**

(45) Bekanntmachung des Hinweises auf die
Patenterteilung:
**25.05.88 Patentblatt 88/21**

(84) Benannte Vertragsstaaten:
**DE FR GB**

(56) Entgegenhaltungen:
**EP-A-0 018 465**
**DE-A-3 022 434**
**SE-B-7 807 412**
**US-A-4 056 748**
**US-A-4 307 325**

(73) Patentinhaber: **ROBERT BOSCH GMBH**
**Postfach 50**
**D-7000 Stuttgart 1 (DE)**

(72) Erfinder: **Hornung, Friedrich, Dipl.-Ing.**
**Am Ochsenwald 10A**
**D-7000 Stuttgart 80 (DE)**
Erfinder: **Schädlich, Fritz, Dipl.-Ing.**
**Panoramastrasse 4**
**D-7022 Leinfelden-Echterdingen (DE)**

Courier Press, Leamington Spa, England.

## Beschreibung

### Stand der Technik

Die Erfindung geht aus von einer Werkzeugmaschine mit einer Regeleinrichtung nach der Gattung des Hauptanspruchs. Aus der SE—B—78 07 412-7 ist es bekannt, bei elektrischen Bohrmaschinen mit Regeleinrichtungen die Motordrehzahl dem im Bohrfutter der Bohrmaschine befestigten Bohrerdurchmesser anzupassen. Bei der Vorrichtung erfolgt die Übertragung des Bohrerdurchmessers zur Regelvorrichtung auf mechanischem Wege. Diese Anordnung hat daher den Nachteil, daß sie konstruktiv sehr aufwendig ist und es schwierig ist, einen geeigneten Übertragungsweg vom sich drehenden Bohrfutter zur fest in der Bohrmaschine angebrachten Regeleinrichtung zu finden. Als weiterer Nachteil ist anzusehen, daß durch die vorbekannte Vorrichtung drehzahlabhängige Signale nicht zu gewinnen sind. Weiterhin ist als Nachteil anzusehen, daß die Regeleinrichtung nur in Abhängigkeit vom Bohrerdurchmesser gesteuert wird. Eine Anpassung der Drehzahl bei der Bearbeitung unterschiedlicher Materialien ist bei der bekannten Vorrichtung nicht möglich.

### Vorteile der Erfindung

Die erfindungsgemäße Werkzeugmaschine mit den kennzeichnenden Merkmalen der Ansprüche 1 und 3 hat demgegenüber den Vorteil, daß die Signalübertragung vom Spannfutter zur Bohrmaschine berührungslos erfolgt. Als weiterer Vorteil ist anzusehen, daß gleichzeitig mit dem Signal für den Bohrerdurchmesser auch ein drehzahlabhängiges Signal vom Signalaufnehmer entnehmbar ist. Der Signalaufnehmer ist doppelt ausnutzbar, er ist zugleich Sollwertgeber für den Bohrerdurchmesser und Istwertgeber für die Drehzahl.

Durch die in den Unteransprüchen aufgeführten Maßnahmen sind vorteilhafte Weiterbildungen und Verbesserungen der im Hauptanspruch angegebenen Regelvorrichtung möglich. Besonders vorteilhaft ist es, den Signalgeber im Bohrfutter auf einer Platte zu lagern, wobei die Platte mittels einer Kraft auf Spannbacken gepresst wird und die Spannbacken an schrägen Flächen der Platte angreifen. Durch diese Maßnahme läßt sich erreichen, daß die Hubbewegung der Spannbacken im Verhältnis zur Platte reduziert wird. Durch eine geeignete Ausbildung der schrägen Flächen ist es so möglich, die Geberkennlinie nach den gewünschten Gegebenheiten auszubilden. Statt schräger Flächen können auch facettenartig abgestufte oder stetig gekrümmte Flächen verwendet werden. Facettenartig abgestufte Flächen sind besonders einfach herstellbar, während durch stetig gekrümmte Flächen Nichtlinearitäten des Übertragungssystems ausgeglichen oder bestimmte erwünschte Nichtlinearitäten erzeugt werden können.

Ist ein Signal erwünscht, das sowohl drehzahlabhängig als auch von der Stellung der Spannbacken abhängig ist, so ist es vorteilhaft, als Signalgeber Dauermagnete zu verwenden. Soll das Signal nur von der Stellung der Spannbacken abhängig sein, ist es günstig einen unmagnetischen Metallring als Signalgeber zu verwenden. Der Signalaufnehmer ist am einfachsten und billigsten induktiv ausgebildet, obwohl auch andere magnetische Aufnehmer, wie Feldplatten oder Hallgeneratoren geeignet sind. Der induktive Signalaufnehmer ist zweckmäßigerweise ringförmig ausgebildet, wobei die Spule von einem Kern umschlossen ist, der Polzähne aufweist. Der so ausgebildete Signalaufnehmer ist um die Antriebsachse der Bohrmaschine befestigt. Diese Anordnung hat den Vorteil, daß ein hoher Wirkungsgrad des Gebersystems erzielt wird und die Spule vor Beschädigungen gut geschützt ist. Insbesondere zur Erzielung eines Signals, das nicht von der Drehzahl abhängig ist, ist es vorteilhaft, in den Signalaufnehmer eine Wechselspannung einzuspeisen. Durch eine Strommessung kann auf einfache Art und Weise die Stellung des Spannfutters ermittelt werden. Durch geeignete Auswerteschaltungen ist es möglich, sowohl eine Regelung in Abhängigkeit von der Drehzahl als auch eine Regelung in Abhängigkeit vom Bohrerdurchmesser und der Drehzahl durchzuführen. Die Regelungsart ist dabei zweckmäßigerweise durch einen Schalter umschaltbar und mittels des Sollwertschalters einstellbar. Insbesondere wenn die Sollwertvorgabeeinrichtung sowohl eine Anzeige als auch ein Umschalten ermöglicht, ist es möglich, eine einfache Ausgestaltung des Werkzeuges zu erzielen. Weiterhin ist es günstig, in Abhängigkeit von der Drehzahl einen Gangwechsel anzeigbar oder steuerbar zu machen. Der erfindungsgemäße Geber kann dann gleichzeitig für den Gangwechsel beispielweise bei einer Bohrmaschine verwendet werden.

### Zeichnung

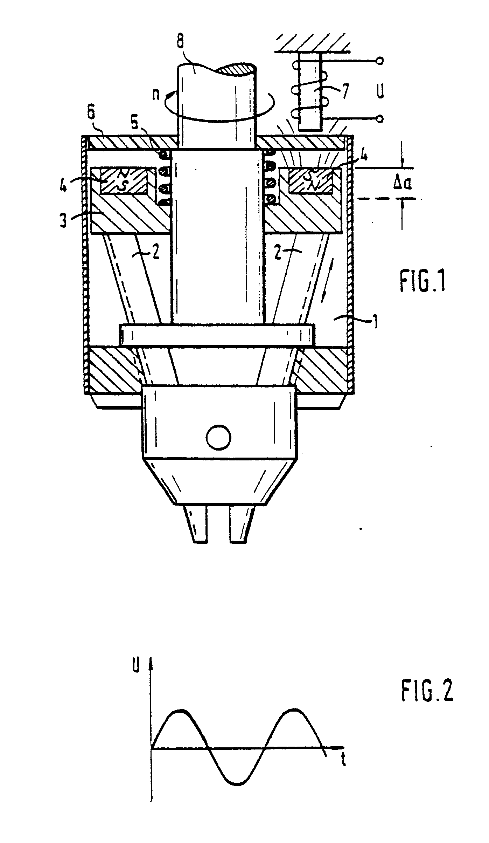

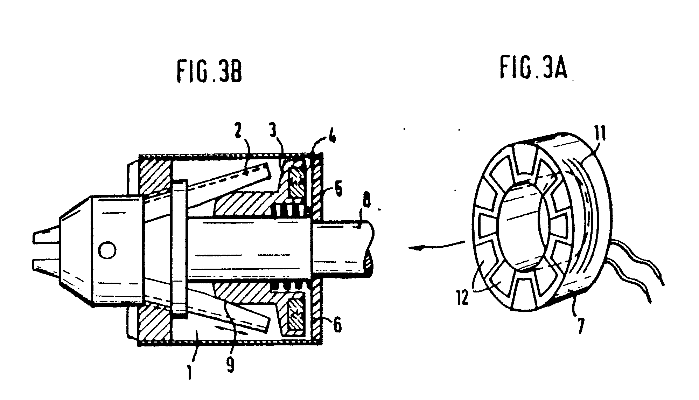

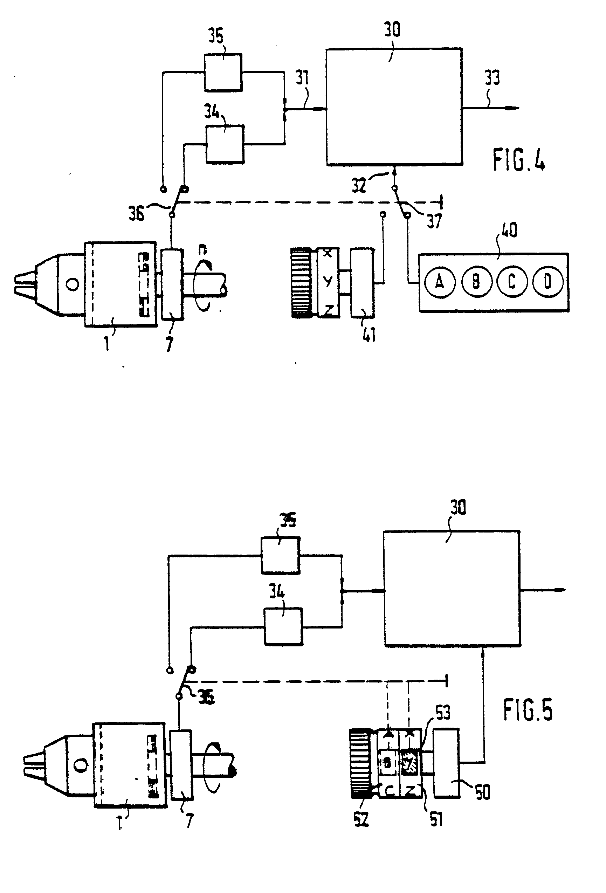

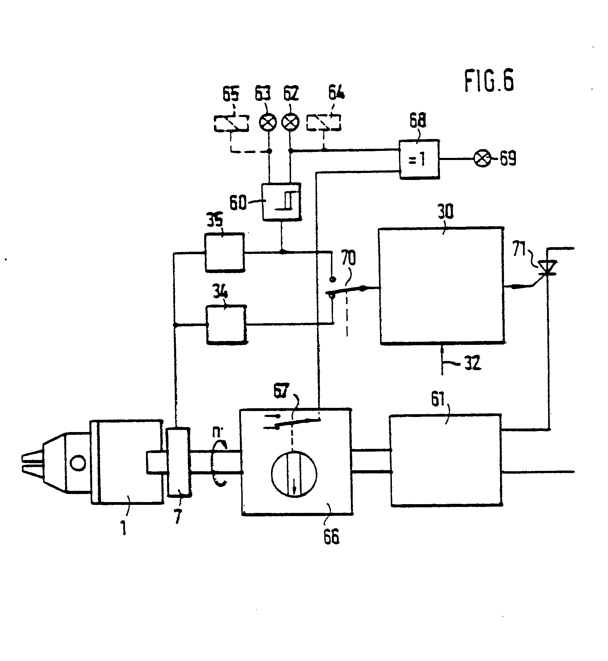

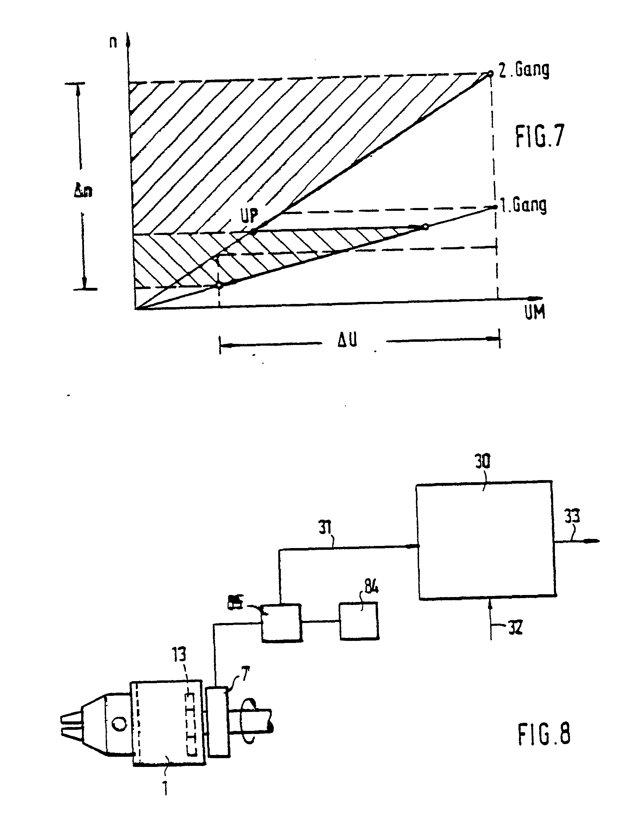

Ausführungsbeispiele der Erfindung sind in der Zeichnung dargestellt und in der nachfolgenden Beschreibung näher erläutert. Es zeigen Figur 1 ein Spannfutter nach der Erfindung, Figur 2 das Ausgangssignal am Signalaufnehmer, Figur 3 ein weiteres Ausführungsbeispiel nach der Erfindung, Figur 4 eine elektrische Regelschaltung für eine Bohrmaschine, Figur 5 ein weiteres Ausführungsbeispiel einer elektrischen Regelschaltung für eine Bohrmaschine, Figur 6 ein drittes Ausführungsbeispiel einer Regeleinrichtung für eine Bohrmaschine, Figur 7 ein Diagramm zur Erläuterung der Funktionweise der Anordnung nach Figur 6 und Figur 8 ein viertes Ausführungsbeispiel einer Regeleinrichtung für eine Bohrmaschine.

### Beschreibung der Ausführungsbeispiele

Bohrmaschinen, die mit einer guten elektronischen Reelung ausgerüstet sind, gestatten die Einstellung und Nutzung der Drehzahl in weiten Grenzen ohne Gangumschaltung. Die Drehzahl, die beispielsweise für einen Bohrvorgang notwendig ist, hängt dabei vom Bohrdurchmesser, vom zu bearbeitenden Material und auch von der Qualität des Bohrers ab.

Beim praktischen Arbeiten wird die Drehzahl vom Bedienenden in der Regel geschätzt oder nach Gefühl eingestellt. Die auf den Bohrmaschinen angebrachten Tabellen werden beim zügigen Arbeiten erfahrungsgemäß kaum beachtet. Das Schätzen der Drehzahl in diesem großen Stellbereich ist mit viel Unsicherheit verbunden und führt insbesondere bei Ungeübten oft zu falschen Drehzahleinstellungen. Die Folge ist, daß entweder das Bohrwerkzeug beispielsweise durch Ausglühen beschädigt wird oder der Arbeitsfortschritt und das Arbeitsergebnis zu wünschen übrig lassen. Der Grundgedanke ist nunmehr, das Regelsignal für den Regelverstärker direkt an der Arbeitsspindel abzunehmen, wobei die Regelung nicht nur in Abhängigkeit von der Drehzahl sondern auch in Abhängigkeit von dem verwendeten Arbeitsgerät erfolgt. Damit wird auch der Drehzahlsprung, den das Getriebe sonst beim Umschalten verursacht, mit ausgeregelt, d.h. beseitigt.

Figur 1 zeigt ein erfindungsgemäßes Spannfutter. In ein herkömmliches Bohrfutter 1 ragen Spannbacken 2. Radial zu einer Antriebswelle 8 ist eine Platte 3 angebracht, die mittels einer Feder 5 auf die Schultern der Backen 2 gedrückt wird. In die Platte 3 sind einzelne Magnete oder ein Magnetring 4 eingebracht. Ein Deckel 6 aus unmagnetischem Material, beispielsweise Kunststoff, schließt das Futter nach oben ab. Fest am Gehäuse der Bohrmaschine ist ein Eisenkern mit einer Spule 7 angebracht, wobei die Spulenanordnung im Wirkungsbereich der Magneten 4 liegen muß.

Bei sich drehendem Bohrfutter liefert der induktive Signalaufnehmer 7 eine Wechselspannung, die in Figur 2 dargestellt ist. Die Frequenz der Spannung ist allein abhängig von der Drehzahl des Bohrfutters 1. Die Höhe der Spannung ist ebenfalls abhängig von der Drehzahl aber zusätzlich auch von dem Abstand der Magneten 4 vom induktiven Signalaufnehmer 7. Die Amplitude der Spannung liefert also eine kombinierte Information über die Drehzahl und den Durchmesser des eingespannten Werkzeuges.

Der induktive Signalabnehmer ist vorteilhafterweise mit dem Spannhals des Werkzeuges fest verbunden und kann im Prinzip beliebig ausgebildet sein. Eine vorteilhafte Ausbildung ist in Figur 3a dargestellt. Der induktive Signalaufnehmer 7 ist ringförmig ausgebildet. In einen Kern 11 ist eine Spule eingelegt. Der Kern 11 weist an seiner Stirnseite Polzähne 12 auf. Diese Spule hat den Vorteil, daß sie die magnetische Energie aller Magnete gleichzeitig ausnutzt, daß sie gegen magnetische Einstreuungen, beispielsweise vom Motor, abgeschirmt ist, daß Unterschiede in den einzelnen Magneten nicht zu Schwankungen der Spannungsamplituden führen, und daß sie konzentrisch zur Welle 8 angebracht ist und damit gut in den Spindelhals integriert werden kann.

Wie stark die Drehzahl von der Stellung der Spannbacken abhängig ist, ist bei dem in Figur 1 gezeigten Ausführungsbeispiel nur sehr schlecht beeinflußbar. Die Amplitude des Signals in Figur 2 nimmt zu, wenn die Drehzahl zunimmt oder der Abstand zur Aufnehmerspule geringer wird. Da die Regelvorrichtung so reagiert, daß das Ausgangssignal des Signalaufnehmers 7 im wesentlichen konstant gehalten wird, ist z.B. eine weitere Öffnung des Bohrfutters zwangsläufig mit einer Zunahme der Drehzahl gekoppelt. In welcher Weise Drehzahl und Bohrfutteröffnung dabei verknüpft sind, d.h. um wieviel die Drehzahl zunimmt, wenn der Spannfutterdurchmesser verändert wird, wird nicht vom Regler, sondern allein von den mechanischen Gegebenheiten im Bohrfutter nach Figur 1 bestimmt. Eine optimale Anpassung an den Regler der Bohrmaschine läßt sich mit der Anordnung nach Figur 1 nur in einem beschränkten Spannbereich erzielen. Für einen größeren Spannbereich ist das Ausührungsbeispiel nach Figur 3b vorteilhafter.

Das Bohrfutter 1 weist wiederum Spannbacken 2 auf, gegen die eine Platte 3 mittels einer Feder 5 gedrückt ist. In die Platten 3 sind wiederum Magnete 4 eingelassen. Das Bohrfutter selbst wird durch einen Deckel 6 abgeschlossen, der ebenfalls aus unmagnetischem Material ist. Aus dem Deckel 6 ragt die Antriebswelle 8 heraus. Die Platte 3 sitzt bei diesem Ausführungsbeispiel nicht auf den Schultern der Spannbacken 2 sondern auf schrägen Flächen 9 auf der Längsseite der Backen. Beim Aufund Zudrehen des Futters gleiten die schrägen Flächen 9 auf den Längsseiten der Backen. Hierdurch kommt eine Übersetzung zustande, so daß beispielsweise beim Öffnen des Futters die in das Futter hineinlaufenden Backen die Platte 3 nur so weit zurückdrängen, als dies der Dickenzuwachs der Backen aufgrund der Schrägflächen 9 erfordert. Die Spannbacken 2 wirken wie einseitig angeschrägte Keile. Durch eine geeignete Ausgestaltung der Spannbacken kann daher in weitem Rahmen das Übersetzungsverhältnis zwischen der Spannbacken- und der Ringbewegung geändert werden. Damit ist eine Möglichkeit gegeben, auf einfache Art und Weise den Einfluß der Spannbackenstellung im Verhältnis zum Einfluß der Drehzahl zu verändern und den Erfordernissen der Bohrmaschine anzupassen.

Statt der schrägen Flächen 9 können auch facettenartig abgestufte oder stetig gekrümmte Flächen gewählt werden. In diesem Fall ist das Verhältnis zwischen Drehzahl und Spannbackenstellung nicht konstant sondern abhängig von der Spannbackenstellung. Damit können z.B. Nichtlinearitäten des Gebersystems ausgeglichen oder auch bestimmte erwünschte Nichtlinearitäten erzeugt werden.

In Figur 4 ist eine Schaltungsanordnung für eine elektrische Bohrmaschine im Blockschaltbild dargestellt. Das Spannfutter 1 ist mit der Achse eines nicht dargestellten Antriebsmotors verbunden. Fest am Gehäuse des Werkzeuges ist der induktive Signalaufnehmer 7 angebracht. Das Ausgangssignal des induktiven Signalaufnehmers führt zu einem Umschalter 36. In der gezeigten Stellung des Umschalters 36 ist das Signal mit einer Auswerteschaltung 34 verbunden, die amplitudenabhängig arbeitet. Die Auswerteschaltung 34 liefert an ihrem Ausgang ein Signal, das dem eingangsseitig anliegenden Spitzen- oder Mittelwert der Wechselspannung entspricht. Das Ausgangssignal der Auswerteschaltung 34 gelangt zum Istwerteingang 31 eines an sich bekannten Reglerbausteines 30. Das Ausgangssignal des Reglerbausteins 33 führt über eine Ausgangsleitung 33 zu einem nicht dargestellten Stellglied, beispielsweise einem Thyristor oder Triac, der auf die Spannungsversorgung des Elektromotors einwirkt.

Über einen weiteren Kontakt des Umschalters 36 ist das Ausgangssignal des induktiven Signalaufnehmers 7 auch mit einer Auswerteschaltung 35 verbindbar, an dessen Ausgang eine Größe entsprechend der Frequenz der Wechselspannung des Signalaufnehmers 7 abgegeben wird. Dieses Ausgangssignal ist ebenfalls mit dem Istwerteingang der Regelschaltung 30 verbunden. Mit dem Sollwerteingang 32 der Regelschaltung 30 ist ein weiterer Schalter 37 verbunden, der zusammen mit dem Umschalter 36 betätigbar ist. In der gezeichneten Stellung verbindet der Umschalter 37 das Signal einer Tastatur 40 mit Tasten A bis D mit dem Sollwerteingang 32. In der anderen Schalterstellung ist der Sollwerteingang mit einem Einsteller 41 verbunden, durch den eine Drehzahl vorgegeben werden kann.

In der gezeichneten Darstellung liefert der induktive Signalaufnehmer 7 das Signal an die Auswerteschaltung 34. Der Regler gleicht jetzt alle Störgrößen aus, die auf die Amplitude des Aufnehmersignals Einfluß nehmen. Das sind beispielsweise das Drehmoment die Getriebeübersetzung und der Bohrerdurchmesser. Die Wirkungsrichtung ist dabei so, daß der Regler am Motor die Spannung erhöht, sobald die Spannung am Aufnehmer 7 absinkt. Dies ist beispielsweise der Fall, wenn das Drehmoment ansteigt, ein kleinerer Bohrer eingespannt wird oder eine Getriebestufe mit höherer Untersetzung gewählt wird.

Damit sich die richtige Drehzahl ergibt, muß ein dem Material entsprechender Sollwert an Eingang 32 eingegeben werden. Dies geschieht durch die Tastatur 40. Der Sollwert ist hier mit den Tasten A bis D bezeichnet und beispielsweise auf unterschiedliche Materialen, z.B. Holz, Stahl, Beton oder Buntmetall abgestimmt. Möglich ist auch die Eingabe der Qualität der Bohrer.

Aus der Drehzahl als bisherige primäre Größe, die der Maschine vorgegeben werden mußte, wird jetzt eine sekundäre Größe, die sich aus den Arbeitsbedingungen ergibt. Insbesondere ist das Getriebe nicht mehr drehzahlbestimmend, es dient allein zur Drehmomentwandlung.

Mit der bisher beschriebenen Funktion ergibt sich beim Bohren mit dem Werkzeug eine weitgehend automatisierte Betriebsart. Insbesondere mit Universalwerkzeugen werden jedoch nicht nur Bohrungen durchgeführt, sondern auch andere Arbeiten, beispielsweise Schrauben oder Polieren erledigt. Hierzu muß die Drehzahl von der Stellung der Bohrfutterbacken unabhängig sein. Durch Umschalten der Schalter 36 und 37 erfolgt die Regelung nur auf die Drehzahl des Werkzeuges, d.h. der Spanndurchmesser der Backen bleibt ohne Einfluß und es können Werkzeuge mit beliebigem Schaft eingespannt werden. In dieser Betriebsart wird der Sollwert nicht von der Tastur 40 geliefert, sondern von dem Einsteller 41, wie er bei herkömmlichen Bohrmaschinen bekannt ist. Der Vorteil, daß die Getriebestellung mit ausgeregelt wird, bleibt auch in dieser Betriebsart erhalten.

Eine kostengünstige Variante des Ausführungsbeispiels nach Figur 4 ist in Figur 5 dargestellt. Die Figur zeigt wiederum das Bohrfutter 1 mit dem zugehörigen Signalaufnehmer 7. Das Ausgangssignal des Signalaufnehmers 7 führt zu dem Umschalter 36. Ein Schaltkontakt des Umschalters 36 führt zu der amplitudenabhängigen Auswerteschaltung 34, ein anderer Kontakt zu der frequenzabhängigen Auswerteschaltung 35. Die Ausgänge beider Auswerteschaltungen führen zum Istwerteingang der Regelschaltung 30. Der Ausgang des Reglers dient zur Steuerung eines Halbleiterschalters, durch den der Motor des Werkzeuges regelbar ist. Mit 50 ist ein Potentiometer kennzeichnet, dessen Ausgangsgröße an den Sollwerteingang des Reglers 30 angeschlossen ist. Das Potentiometer 50 weist eine erste Skala 51 für die Drehzahlen und eine zweite Skala 52 für die Materialien auf. Dies Skalen werden mit einem Schieber 53 entsprechend den Schalterstellungen des Schalters 36 abgedeckt. Beispielsweise entspricht die gezeichnete Stellung der Betriebsart, bei der der Bohrdurchmesser mit in die Regelung eingeht. Mit dem Umschalter 36 wird gleichzeitig der Schieber 53 betätigt. Durch die Anordnung nach Figur 5 wird die Tastatur und ein Kontaktsatz eingespart. Durch diese Anordnung wird vor allem die Bedienung eindeutig, in dem in der einen Betriebsart keine Drehzahlen und in der anderen Betriebsart keine Materialien eingestellt werden können. Mittels eines zusätzlichen, nicht dargestellten Kontakts ist es auch möglich, bei einer bestimmten Stellung des Schiebers 53 Zusatzgeräte einzuschalten. Wenn z.B. die Materialart "Beton" eingestellt ist, kann eine Schlagbohrvorrichtung eingeschaltet werden.

In Figur 6 ist ein Ausführungsbeispiel dargestellt, mit dem die verschiedenen Getriebestufen eingestellt werden können. Das Bohrfutter 1 wird über ein Getriebe 66 von einem Motor 61 angetrieben. Fest am Gehäuse des Werkzeuges ist der Signalaufnehmer 7 angebracht. Der Signalaufnehmer 7 steht mit der amplitudenabhängigen Auswerteschaltung 34 und der frequenzabhängigen Auswerteschaltung 35 in Verbindung. Der Umschalter 70 verbindet einen der Ausgänge der Auswerteschaltungen 34 oder 35 mit dem Istwerteingang des Reglers 30. An den Eingang 32 wird das Sollwertsignal angelegt. Der Ausgang des Reglers 30 ist an die Steuerelektrode eines Thyristors 71 angeschlossen. Der Thyristor 71 liegt in einer Versorgungsspannungsleitung für den Motor 61. Ein Schwellwertschalter 60 ist an den Ausgang der frequenzabhängigen Auswerteschaltung 35 angeschlossen. Die Ausgänge des Schwellwertschalters 60 sind mit Leuchten 62 und 63 verbunden. Weiterhin ist ein Stellmagnet 64 an die Anschlußleitung der Leuchte 62 und ein Stellmagnet 65 an die Anschlußleitung zur Leuchte 63 anschließbar. Ein Eingang eines Exklusiv-Oder-Gliedes 68 ist mit einem Getriebeschaltkontakt 67 im Getriebe 66 verbunden. Ein weiterer Eingang des Exklusiv-Oder-Gliedes 68 führt zur Anschlußleitung der Leuchte 62. Der Ausgang des Exklusiv-Oder-Gliedes 68 steht mit einer Leuchte 69 in Verbindung.

·Aus den Drehzahlsignalen des induktiven Signalaufnehmers läßt sich ein Signal gewinnen, das die erforderliche Getriebestufe z.B. für eine Zweigang-Bohrmaschine mittels Leuchten anzeigt oder selbständig schaltet. Die Schaltschwelle, die durch den Schwellwertschalter 60 festgelegt wird, entspricht einem Umschaltpunkt im Drehzahlbereich der Maschine. Die Wirkungsweise dieser Schaltungsanordnung soll näher anhand der Figur 7 erläuter werden.

In Figur 7 ist mit ΔU der Stellbereich des Reglers benamt, der eine entsprechende Spannung an den Motor 61 liefert. Mit Δn ist der Drehzahlbereich der Maschine im Leerlauf gekennzeichnet. Der Umschaltpunkt UP ergibt sich im wesentlichen aus den Übersetzungen der Gänge 1 und 2 des Getriebes 66 und dem Stellbereich des Reglers 30. Der Umschaltpunkt UP wird zweckmäßigerweise in die Mitte des mit gestrichelten Linien gekennzeichneten Überlappungsbereiches der beiden Gänge gelegt.

Die Anzeige der Getriebeumschaltung funktioniert unabhängig von der Stellung des Bohrfutters mit Hilfe des drehzahlabhängigen Signals am Ausgang der Auswerteschaltung 35. Sinkt die Drehzahl unter einen vorgegebenen Wert ab, so wird beispielsweise durch die Diode 62 angezeigt, daß der erste Gang einzuligen ist. Ist die Drehzahl des Umschaltpunktes überschritten, so wird durch die Leuchtdiode 63 angezeigt, daß der zweite Gang einzulegen ist. Mittels der Stellmagnete 64 und 65 ist dieser Vorgang zu automatisieren, in dem durch die Magnete 64 und 65 das Getriebe direkt betätigt wird.

Eine Vereinfachung der Anzeige wird erreicht, in dem der Sollzustand des Getriebes mit seinem Istzustand verglichen wird. Dazu wird mit der Getriebeumschaltung der Schalter 67 betätigt, der an seinem Ausgang im ersten Gang beispielsweise eine 1 liefert und im zweiten Gang eine Null. Dieses Signal wird durch das Gatter 68 mit dem Signal des Schwellwertschalters 60 auf Übereinstimmung überprüft, und zwar so, daß am Ausgang des Gatters 68 eine logische Eins nur dann erscheint, wenn die Eingangssignale nicht übereinstimmen. Die Anzeige 69 leuchtet dann nur auf, wenn das Getriebe umgeschaltet werden muß. Diese Vereinfachung trägt vor allem zur Eindeutigkeit der Bedienung bei, da bei bereits richtiger Getriebeeinstellung keine Anzeige erscheint.

In bestimmten Fällen kann bei einer Bohrmaschine allein das Erfassen des Bohrerdurchmesser für eine Regelung wichtig sein. Dies ist beispielsweise bei batteriebetriebenen Eingang-Bohrmaschinen der Fall, die mit Nebenschluß- oder Permanentmagnetmotoren ausgerüstet sind. Das Anzeigesystem muß dann drehzahlunabhängig arbeiten. Ein Ausführungsbeispiel dieser Art ist in Figur 8 dargestellt. Das Bohrfutter 1 ist im Prinzip aufgebaut wie in Figur 1, der Magnetring 4 ist jedoch durch einen einfachen unmagnetischen Metallring 13 ersetzt. Der Signalaufnehmer 7 kann beliebig oder entsprechend Figur 3 aufgebaut sein. Der Signalaufnehmer 7 wird durch einen Frequenzgenerator 84 mit einer Wechselspannung gespeist. Dazwischen ist ein Meßwandler 85 geschaltet, der den Wechselstrom durch den Signalaufnehmer 7 misst. Die Spule des Signalaufnehmers 7 wird durch den Metallring 13 induktiv belastet. Die Belastung bewirkt eine Änderung des Spulenstroms in Abhängigkeit von der Stellung des Metallringes 13. Der Meßwandler 85 setzt diese Änderungen in eine vom Regler 30 verarbeitbare Größe um und zwar so, daß der Regler die Motorspannung verkleinert, wenn der Bohrerdurchmesser vorgrößert wird. Die Anordnung nach Figur 8 bietet weiterhin die Möglichkeit, neben der Information für den Bohrerdurchmesser getrennt eine Information über die Drehzahl zu erhalten. Dazu wird der Metallring 13 nicht als geschlossener Ring ausgeführt, sondern in eine ausreichende Anzahl Segmente zerlegt. Die Belastung der Spule ist dann von der Winkelstellung des Ringes gegenüber der Spule abhängig. Dreht sich der Ring, dann wird aufgrund der Wechselbelastung die Spulenspannung mit einer drehzahlproportionalen Frequenz überlagert, d.h. amplitudenmoduliert. Das Signal, das den Meßwertaufnehmer 85 durchfließt, enthält dann Informationen über den Bohrerdurchmesser und über die Drehzahl, die durch ihre Frequenzen voneinander trennbar sind. Die Information für den Bohrerdurchmesser steckt in der Amplitude der Generatorwechselspannung, die für die Drehzahl in der Frequenz der Segmentwechselspannung. Unter der Voraussetzung, daß beide Frequenzen ausreichend weit auseinanderliegen, können diese Spannungen durch Filter getrennt und separat weiterverarbeitet werden.

**Patentansprüche**

1. Werkzeugmaschine, insbesondere eine elektrische Bohrmaschine, mit einer Regelvorrichtung (30) zur Steuerung des Antriebs der Werkzeugmaschine, mit einem Spannfutter (1), mit einem mit dem Spannfutter (1) in Verbindung stehenden Signalgeber (3, 4), der mittels einer mittels der Spannbacken (2) des Spannfutters (1) in axialer Richtung bewegbaren Platte (3) verstellbar ist, und mit einem Signalaufnehmer im Gehäuse der Werkzeugmaschine, dadurch gekennzeichnet, daß der Signalgeber (3, 4) Bereiche unterschiedlicher induktiver oder magnetischer Eigenschaften aufweist, die an der Platte (3) ringförmig angeordnet sind, und daß auf dem Schaft der Werkzeugmaschine ein auf induktive oder magnetische Änderungen ansprechender Signalaufnehmer (7) als Istwertgeber für Durchmesser und/oder Drehzahl des Bohrers angebracht ist.

2. Werkzeugmaschine nach Anspruch 1, dadurch gekennzeichnet, daß der Signalgeber (4) Dauermagnete aufweist, die an der Platte (3) ringförmig angeordnet sind.

3. Werkzeugmaschine, insbesondere eine elektrische Bohrmaschine, mit einer Regelvorrichtung (30) zur Steuerung des Antriebs der Werkzeugmaschine, mit einem Spannfutter (1) mit einem mit dem Spannfutter (1) in Verbindung stehenden Signalgeber (3, 4), der mittels einer mittels der Spannbacken (2) des Spannfutters (1) in axialer Richtung bewegbaren Platte (3) verstellbar ist und mit einem Signalaufnehmer im Gehäuse der Werkzeugmaschine, dadurch gekennzeichnet, daß der Signalgeber (3, 4) als Metallring aus unmagnetischen Material gebildet ist und daß auf dem Schaft der Werkzeugmaschine ein auf Induktionsänderungen ansprechender Signalaufnehmer (17) als Istwertgeber für Durchmesser und/oder Drehzahl des Bohrer angebracht ist.

4. Werkzeugmaschine nach Anspruch 3, dadurch gekennzeichnet, daß der Metallring Segmente aufweist.

5. Werkzeugmaschine nach einem der Ansprüche 1 bis 4, dadurch gekennzeichnet, daß die Spannbacken (2) an schrägen Flächen (9) der Platte (3) angreifen.

6. Werkzeugmaschine nach einem der Ansprüche 1 bis 4, dadurch gekennzeichnet, daß die Spannbacken (2) an schrägen Flächen (9) der Platte (3) angreifen, die facettenartig abgestuft sind.

7. Werkzeugmaschine nach Anspruch 6, dadurch gekennzeichnet, daß die schrägen Flächen stetig gekrümmt sind.

8. Werkzeugmaschine nach einem der Ansprüche 1 bis 7, dadurch gekennzeichnet, daß der Signalaufnehmer (7) ringförmig ausgebildet ist, wobei eine Spule von einem Kern (11) umschlossen ist, der Polzähne (12) aufweist.

9. Werkzeugmaschine nach einem der Ansprüche 1 bis 8, dadurch gekennzeichnet, daß das Spannfutter (1) rückseitig aus unmagnetischem Material (6) gebildet ist.

10. Werkzeugmaschine nach einem der Ansprüche 1 bis 9, dadurch gekennzeichnet, daß in den Signalaufnehmer (7) eine Wechselspannung oder -strom eingespeist ist.

11. Werkzeugmaschine nach einem der Ansprüche 1 bis 10, dadurch gekennzeichnet, daß das Ausgangssignal des Signalaufnehmers (7) einer amplitudenabhängigen Auswerteschaltung (34) zugeführt ist, deren Ausgangssignal an den Istwerteingang (31) der Regelvorrichtung (30) geführt ist.

12. Werkzeugmaschine nach einem der Ansprüche 1 bis 10, dadurch gekennzeichnet, daß das Ausgangssignal des Signalaufnehmers (7) einer frequenzabhängigen Auswerteschaltung (35) zugeführt ist, deren Ausgangssignal an den Istwerteingang (31) der Regelvorrichtung (30) zugeführt ist.

13. Werkzeugmaschine nach einem der Ansprüche 1 bis 12, dadurch gekennzeichnet, daß Einrichtungen (40, 41; 50 bis 53) vorgesehen sind, mit denen zahl- oder lastabhängige Sollwerte vorgebbar sind.

14. Werkzeugmaschine nach Anspruch 13, dadurch gekennzeichnet, daß mit der Sollwert-Vorgabeeinrichtung (50 bis 53) aufdrehzahl- oder lastabhängige Regelung umschaltbar ist.

15. Werkzeugmaschine nach Anspruch 12 oder 13, dadurch gekennzeichnet, daß die Sollwertvorgabe vom zu bearbeitendem Material bestimmt ist.

16. Werkzeugmaschine nach Anspruch 15, dadurch gekennzeichnet, daß bei bestimmten Sollwertvorgaben Zusatzvorrichtungen einschaltbar sind.

17. Werkzeugmaschine nach einem der Ansprüche 1 bis 16, dadurch gekennzeichnet, daß in Abhängigkeit von der Drehzahl ein Gangwechsel anzeigbar oder steuerbar ist.

18. Werkzeugmaschine nach einem der Ansprüche 1 bis 17, dadurch gekennzeichnet, daß ein Meßwandler (85) vorgesehen ist, der in Abhängigkeit vom Spulenstrom bzw. von der Spulenspannung den Istwert für die Regelvorrichtung (30) liefert.

19. Werkzeugmaschine nach Anspruch 18, dadurch gekennzeichnet, daß dem Meßwandler (85) Filter nachgeschaltet sind, durch die drehzahlabhängige und amplitudenabhängige Signale voneinander trennbar sind.

**Revendications**

1. Machine-outil, en particulier perceuse électrique, comportant un dispositif de régulation (30) pour la commande de l'entraînement de la machine-outil, un mandrin de serrage (1) muni d'un émetteur de signal (3, 4) qui lui est relié et qui règle au moyen d'une plaque (3) mobile axialement au moyen des mors (2) du mandrin (1), et d'un récepteur dans le carter de la machine-outil, caractérisée en ce que l'émetteur comporte des domaines de propriétés inductives ou magnétiques différentes qui sont disposés de façon annulaire sur la plaque (3) et que sur l'arbre de la machine-outil est placé un récepteur (7) percevant les variations inductives ou magnétiques en tant que donneur de valeur de consigne pour le diamètre ou la vitesse de rotation du foret.

2. Machine-outil selon la revendication 1, caractérisée en ce que l'émetteur (4) comporte des aimants permanents qui disposés de façon annulaire sur la plaque (3).

3. Machine-outil, en particulier perceuse électrique, comportant un dispositif de régulation (30) pour la commande de l'entraînement de la machine-outil, un mandrin de serrage (1) comprenant un émetteur de signaux (3, 4) se trouvant en liaison avec le mandrin (1) qui est réglable par une plaque (3) mobile en direction axiale au moyen des mors (2) du mandrin (1) et d'un récepteur sur le carter de la machine-outil, caractérisée en ce que l'émetteur (3, 4) est sous forme d'un anneau métallique en matériau non-magnétique et en ce qu'un récepteur (7) sensible aux variations d'induction est placé sur l'arbre de la machine-outil comme émetteur de valeur de consigne pour le diamètre ou la vitesse de rotation du foret.

4. Machine-outil selon la revendication 3, caractérisée en ce que l'anneau métallique comporte des segments.

5. Machine-outil selon l'une des revendications 1 à 4, caractérisée en ce que mors de serrage (2) s'engagent sur les faces obliques (9) de la plaque (3).

6. Machine-outil selon l'une des revendications 1 à 4, caractérisée en ce que les mors (2) s'engagent sur les faces obliques (9) de la plaque (3) qui vont en diminuant en formant des facettes.

7. Machine-outil selon la revendication 6, caractérisée en ce que les faces obliques (9) sont incurvées de façon constante.

8. Machine-outil selon l'une des revendications 1 à 7, caractérisée en ce que le récepteur (7) est de forme annulaire, une bobine entourée par un noyau (11) comportant des pièces polaires (12).

9. Machine-outil selon l'une des revendications 1 à 9, caractérisée en ce que le mandrin (1) est constitué sur sa partie arrière d'un matériau non-magnétique.

10. Machine-outil selon l'une des revendications 1 à 9, caractérisée en ce qu'un convertisseur de tension ou d'intensité alimente le récepteur (7).

11. Machine-outil selon l'une des revendications 1 à 10, caractérisée en ce que le signal de sortie du récepteur (7) est amené à un transformateur de liaison (34) dont le signal de sortie constitue la valeur de consigne d'entrée (31) du dispositif de régulation (30).

12. Machine-outil selon l'une des revendications 1 à 10, caractérisée en ce que le signal de sortie du récepteur (7) est amené à un transformateur (35) dépendant de la fréquence dont le signal de sortie est conduit à l'entrée de la valeur de consigne (31) du dispositif de régulation (30).

13. Machine-outil selon l'une des revendications 1 à 12, caractérisée en ce que sont prévus des dispositifs (40, 41, 50 à 53) grâce auxquels on peut régler les valeurs de consigne en fonction du nombre ou de la charge.

14. Machine-outil selon la revendication 13, caractérisé en ce qu'on peut opérer la régulation en fonction de la vitesse de rotation ou de la charge grâce au dispositif (50 à 53) de données ou de valeur de consigne.

15. Machine-outil selon la revendication 12 ou 13, caractérisée en ce que la valeur de consigne préétablie est fonction de la matière à usiner.

16. Machine-outil selon la revendication 15, caractérisée en ce que pour la prédétermination de la valeur de consigne, on peut intercaler des dispositifs additionnels.

17. Machine-outil selon l'une des revendications 1 à 16, caractérisée en ce qu'un changement de vitesse peut être effectué ou commandé en fonction de la vitesse de rotation.

18. Machine-outil selon l'une des revendications 1 à 17, caractérisée en ce qu'est prévu un convertisseur de mesure (85) qui délivre en fonction de l'intensité ou de la tension de la bobine la valeur effective pour le dispositif de régulation (30).

19. Machine-outil selon la revendication 18, caractérisée en ce que des filtres sont intercalés à la suite du transformateur de mesure (85) grâce auxquels on peut séparer les unes des autres les signaux dépendant de la vitesse de rotation et ceux dépendant de l'amplitude.

**Claims**

1. Machine tool, in particular an electric drilling machine comprising a control device (30) for the control of the drive of the machine tool, a clamping chuck (1), a signal transmitter (3, 4) connected to the clamping chuck (1) which is adjustable by means of a plate movable in axial direction (3) by means of the clamping jaws (2) of the clamping chuck (1), and a signal sensor in the housing of the machine tool, characterized in that the signal transmitter (3, 4) has ranges of different inductive or magnetic characteristics which are arranged annularly at the plate (3) and that on the shaft of the machine tool a signal sensor (7) which responds to inductive or magnetic changes is attached as actual value sensor for diameter and/ or speed of the drill.

2. Machine tool according to Claim 1, characterized in that the signal transmitter (4) has permanent magnets which are arranged annularly at the plate (3).

3. Machine tool, in particular an electric drilling machine comprising a control device (30) for the control of the drive of the machine tool, a clamping chuck (1), a signal transmitter (3, 4) connected to the clamping chuck (1) which is adjustable by means of a plate movable in axial direction (3) by means of the clamping jaws (2) of the clamping chuck (1), and a signal sensor in the housing of the machine tool, characterized in that the signal transmitter (3, 4) is shaped as a metal ring of non-magnetic material and that on the shaft of the machine tool a signal sensor (7) which responds to induction changes is attached as actual value transmitter for diameter and/or speed of the drill.

4. Machine tool according to Claim 3, characterized in that the metal ring has segments.

5. Machine tool according to any of Claims 1 to 4, characterized in that the clamping jaws (2) engage on angled surfaces (9) of the plate (3).

6. Machine tool according to any of Claims 1 to 4, characterized in that the clamping jaws (2) engage an angled surfaces (9) of the plate (3) which are graded in a bevelled manner.

7. Machine tool according to Claim 6, characterized in that the angled surfaces (9) are continuously curved.

8. Machine tool according to any of Claims 1 to 7, characterized in that the signal sensor (7) is of annular design, a coil being enclosed by a core (11) which has pole teeth (12).

9. Machine tool according to any of Claims 1 to 8, characterized in that the clamping chuck (1) is formed from non-magnetic material on the reverse side.

10. Machine tool according to any of Claims 1 to 9, characterized in that an alternating voltage or current is fed into the signal sensor (7).

11. Machine tool according to any of Claims 1 to 10, characterized in that the output signal of the signal sensor (7) is supplied to an amplitude-dependent evaluation circuit (34), the output signal of which is led to the actual value input (31) of the control device (30).

12. Machine tool according to any of Claims 1 to 10, characterized in that the output signal of the signal sensor (7) is fed to a frequency-dependent evaluation circuit (35), the output signal of which is led to the actual value input (31) of the control device (30).

13. Machine tool according to any of Claims 1 to 12, characterized in that devices (40, 41; 50 to 53) are provided with which speed-dependent or load-dependent setpoints can be preset.

14. Machine tool according to Claim 13, characterized in that speed-dependent or load-dependent adjustment can be switched over to with the setpoint presetting device (50 to 53).

15. Machine tool according to Claim 12 or 13, characterized in that the preset setpoint is determined by the material to be processed.

16. Machine tool according to Claim 15, characterized in that auxiliary devices can be connected in the case of certain preset setpoints.

17. Machine tool according to any of Claims 1 to 16 characterized in that a gear change is indicatable or controllable as a function of the speed.

18. Machine tool according to any of Claims 1 to 17, characterized in that a measuring transformer (85) is provided which supplies the actual value for the control device (30) as a function of the coil current or the coil voltage.

19. Machine tool according to Claim 18, characterized in that downstream from the measuring transformer (85) there are filters, by means of which the speed-dependent and amplitude-dependent signals are separable from one another.

0 099 992

FIG.1

Δa

FIG.2

FIG.3B

FIG.3A

FIG.4

FIG.5

0 099 992

FIG.6

4

FIG.7

FIG.8